(19) Europäisches Patentamt
European Patent Office
Office européen des brevets

(11) EP 4 566 709 A1

(12) EUROPEAN PATENT APPLICATION
published in accordance with Art. 153(4) EPC

(43) Date of publication:
11.06.2025 Bulletin 2025/24

(21) Application number: 23850112.6

(22) Date of filing: 02.08.2023

(51) International Patent Classification (IPC):
B01J 27/051 (2006.01)        B01J 37/04 (2006.01)
C01G 39/06 (2006.01)         C25B 1/04 (2021.01)

(52) Cooperative Patent Classification (CPC):
B01J 27/051; B01J 37/04; C01G 39/06; C25B 1/04

(86) International application number:
PCT/JP2023/028256

(87) International publication number:
WO 2024/029558 (08.02.2024 Gazette 2024/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.08.2022 JP 2022123199

(71) Applicant: DIC Corporation
Tokyo 174-8520 (JP)

(72) Inventors:
• YUAN, Guohao
Sakura-shi, Chiba 285-8668 (JP)

• OMICHI, Koji
Sakura-shi, Chiba 285-8668 (JP)
• YOSHIMURA, Takumi
Sakura-shi, Chiba 285-8668 (JP)
• TANGE, Mutsuko
Sakura-shi, Chiba 285-8668 (JP)
• UOTA, Masafumi
Sakura-shi, Chiba 285-8668 (JP)
• KOU, Youki
Sakura-shi, Chiba 285-8668 (JP)
• YUAN, Jianjun
Sakura-shi, Chiba 285-8668 (JP)

(74) Representative: TBK
Bavariaring 4-6
80336 München (DE)

(54) **COMPOSITE BODY, CATALYTIC INK, AND METHOD FOR MANUFACTURING COMPOSITE BODY**

(57) A composite product includes molybdenum disulfide particles and palladium particles, in which an average crystallite size of molybdenum disulfide included in the molybdenum disulfide particles determined from a peak of $2\theta = 14.4°\pm0.5°$ obtained by X ray diffraction measurement is 150 nm or less. A catalyst ink includes the composite product and a dispersing medium. A method for producing the composite product includes a step of mixing molybdenum disulfide particles and a palladium solution, in which an average crystallite size of molybdenum disulfide included in the molybdenum disulfide particles determined from a peak of $2\theta = 14.4° \pm 0.5°$ obtained by X ray diffraction measurement is 150 nm or less.

FIG. 2

**Description**

Technical Field

The present invention relates to a composite product, a catalyst ink, and a method for producing a composite product.

The present application claims priority based on Japanese Patent Application No. 2022-123199, filed on August 2, 2022, the content of which is incorporated herein.

Background Art

Water electrolysis technology has been attracting attention as the technology that can produce hydrogen from water using electricity from renewable energy sources, aiming to solve environmental problems and energy resource problems.

Layered transition metal chalcogen compounds represented by molybdenum disulfide ($MoS_2$) have been expected as materials having high catalytic activity despite low price and abundant resource amount.

PTL 1 has described a method for producing metal ion-doped molybdenum disulfide. The metal cation of the doped metal is uniformly dispersed between each layer of molybdenum disulfide and the crystal structure of this material is said to retain a two-dimensional sheet structure of molybdenum disulfide.

Citation List

Patent Literature

PTL 1: Chinese Unexamined Patent Application Publication No. 106608652

Summary of Invention

Technical Problem

However, there is still a room for consideration for providing novel catalyst materials containing molybdenum disulfide.

An object of the preset invention is to provide a composite product that can be used as a catalyst, a catalyst ink, and a method for producing a composite product. Solution to Problem

The present invention includes the following aspects.

<1> A composite product including:

molybdenum disulfide particles; and
palladium particles, in which
an average crystallite size of molybdenum disulfide included in the molybdenum disulfide particles determined from a peak of $2\theta = 14.4° \pm 0.5°$ obtained by X ray diffraction measurement is 150 nm or less.

<2> The composite product according to <1>, in which an average particle diameter of the palladium particles is 20 nm or less.

<3> The composite product according to <1> or <2>, in which the palladium particles are present on a surface of the molybdenum disulfide particles.

<4> The composite product according to any one of <1> to <3>, in which the palladium particles include an aggregate of palladium atoms having no crystal structure.

<5> The composite product according to any one of <1> to <4>, in which a median diameter $D_{50}$ of the composite product determined by a dynamic light scattering method is 1,000 nm or less.

<6> The composite product according to any one of <1> to <5>, in which a specific surface area of the composite product measured by a BET method is 10 $m^2/g$ or more and 200 $m^2/g$ or less.

<7> The composite product according to any one of <1> to <6>, in which a ratio of a content of palladium with respect to a total mass of the composite product determined by XRF analysis is 0.1 mass% or more.

<8> The composite product according to any one of <1> to <7>, in which molybdenum disulfide included in the molybdenum disulfide particles includes a 3R crystal structure.

<9> The composite product according to any one of <1> to <8>, in which a shape of primary particles of the molybdenum disulfide particles is a string shape, a ribbon shape, or a sheet shape and an average thickness is 50 nm or less.

<10> A catalyst ink including:

the composite product according to any one of <1> to <9>; and
a solvent.

<11> A method for producing the composite product according to any one of <1> to <9>, the method including a step of mixing molybdenum disulfide particles and a palladium solution, in which an average crystallite size of molybdenum disulfide included in the molybdenum disulfide particles determined from a peak of $2\theta = 14.4° \pm 0.5°$ obtained by X ray diffraction measurement is 150 nm or less.

Advantageous Effects of Invention

According to the present invention, a composite product that can be used as a catalyst, a catalyst ink, and a method for producing a composite product can be provided.

Brief Description of Drawings

FIG. 1 is a schematic view illustrating one example of an apparatus used for producing molybdenum trioxide particles serving as a raw material of molybdenum disulfide particles related to a composite product according to embodiments.
FIG. 2 is a chart illustrating X ray diffraction (XRD) profiles of each of particles obtained in Synthesis Example 1, Examples 1 to 4, and Comparative Example 1 in an overlapped manner.
FIG. 3 includes transmission electron microscope (TEM) images of each of the particles obtained in Synthesis Example 1, Examples 1 to 4, and Comparative Example 1.
FIG. 4 includes high resolution transmission electron microscope (HR-TEM) images and an image illustrating the result of element mapping measured by energy dispersive X-ray spectroscopy (EDS) of the composite product particles obtained in Example 2.
FIG. 5 includes a HAADF-STEM image (transmitted electron image) and a SEI image (secondary electron image)of the composite product particles obtained in Example 2. Description of Embodiments

Hereinafter, the embodiment of the composite product, the catalyst image, and the method for producing a composite product according to the present invention will be described.

<<Composite Product>>

The composite product according to the embodiment includes molybdenum disulfide particles and palladium particles, in which an average crystallite size of molybdenum disulfide included in the molybdenum disulfide particles determined from a peak of $2\theta = 14.4° \pm 0.5°$ obtained by X ray diffraction measurement is 150 nm or less.
The composite product according to the embodiment has a composite structure of the molybdenum disulfide particles and the palladium particles.
In the present specification, the term "composite product" may be a state where the molybdenum disulfide particles and the palladium particles are unified due to arbitrary interactions. The interactions are not particularly limited. Physical interactions and chemical bonds such as coordination bonds, ionic bonds, and intermolecular forces, for example, bonds between S-Pd between the surface (for example, in the case where the shape of the molybdenum disulfide particles is a sheet shape or a ribbon shape (described below), dimples or wrinkles at the surface are presumed ) of the molybdenum disulfide particles and the surface of the palladium particles are presumed.
The average crystallite size of molybdenum disulfide contained in the molybdenum disulfide particles determined from the peak of $2\theta = 14.4° \pm 0.5°$ obtained by X-ray diffraction measurement is 150 nm or less, preferably 50 nm or less, more preferably 40 nm or less, still more preferably 20 nm or less, further more preferably 10 nm or less, and particularly preferably less than 6 nm.
The peak of $2\theta = 14.4° \pm 0.5°$ described above is attributed to the plane (002) or the plane (003) of molybdenum disulfide ($MoS_2$). Small average crystallite size such as a size having the above upper limit value or less allows catalytic active sites such as interfaces and defects contributing to catalytic activity to increase and catalyst performance to be improved.

As one example, the lower limit value of the average crystallite size of the molybdenum disulfide determined from the peak of $2\theta = 14.4° \pm 0.5°$ obtained by X-ray diffraction measurement may be 1 nm or more, 2 nm or more, or 3 nm or more.

As one example of the value range of the value of the average crystallite size of molybdenum disulfide determined from the peak of $2\theta = 14.4° \pm 0.5°$ obtained by X-ray diffraction measurement, the range may be 1 nm or more and 150 nm or less, 2 nm or more and 50 nm or less, 2 nm or more and 40 nm or less, 3 nm or more and 20 nm or less, 3 nm or more and 10 nm or less, or 3 nm or more and less than 6 nm.

The average crystallite size of molybdenum disulfide contained in the molybdenum disulfide particles according to the embodiment can be measured by the following measurement method.

[Measurement of Crystallite Size]

The measurement is performed by using an X-ray diffraction apparatus (for example, SmartLab 9kV manufactured by Rigaku Corporation), using a scintillation counter as a detector, and using analysis software (for example, PDXL2). The measurement method is a $2\theta/\theta$ method. The average crystallite size of the particles is calculated from the full width at half maximum (FWHM) of the peak appearing at $2\theta = 14.4° \pm 0.5°$ using the Scherrer formula. As the measurement conditions, the scanning speed ($2\theta$) is 2.0°/min, the scan range ($2\theta$) is 10° to 70°, the step ($2\theta$) is 0.02°, and the instrument standard width is determined to be zero.

The composite product according to the embodiment may be a particulate structure (composite product particles).

In the composite product according to the present embodiment, the median diameter $D_{50}$ determined by a dynamic light scattering method is preferably 1,000 nm or less, more preferably 600 nm or less, and still more preferably 500 nm or less.

The composite product having a median diameter $D_{50}$ of equal to or less than the upper limit value can exhibit more effective catalytic efficiency.

As one example, the median diameter $D_{50}$ of the composite product according to the embodiment determined by the dynamic light scattering method may be 20 nm or more, 40 nm or more, 100 nm or more, or 300 nm or more.

As one example of the numerical value range of the value of the median diameter $D_{50}$ of the composite product according to the embodiment determined by the dynamic light scattering method, the range may be 20 nm or more and 1,000 nm or less, 40 nm or more and 600 nm or less, 100 nm or more and 500 nm or less, or 300 nm or more and 500 nm or less.

The median diameter $D_{50}$ of the composite product according to the present embodiment calculated by the dynamic light scattering method can be obtained as a particle diameter at which the ratio of a volume integration percent is 50% in the particle size distribution measured in a wet manner using a dynamic light scattering particle size distribution analyzer (for example, Nanotrac Wave II manufactured by MicrotracBEL Corp.) with acetone as a medium.

The specific surface area of the composite product according to the embodiment measured by a BET method is preferably 10 $m^2/g$ or more, more preferably 30 $m^2/g$ or more, and still more preferably 40 $m^2/g$ or more.

The composite product having a specific surface area of equal to or more than the lower limit value can improve catalytic efficiency more effectively due to an increase in catalytically active sites and easier mass transfer in the reaction system because of the large specific surface area.

As one example, the specific surface area of the composite product according to the embodiment measured by the BET method may be 200 $m^2/g$ or less or 100 $m^2/g$ or less.

As one example of the numerical value range of the value of the specific surface area of the composite product according to the embodiment measured by the BET method, the range may be 10 $m^2/g$ or more and 200 $m^2/g$ or less, 30 $m^2/g$ or more and 200 $m^2/g$ or less, or 40 $m^2/g$ or more and 100 $m^2/g$ or less.

As the above specific surface area, measurement is performed with a specific surface area meter (for example, BELSORP-mini, manufactured by MicrotracBEL Corp.) and the surface area per gram of a sample measured from the amount of adsorbed nitrogen gas by the BET method (Brunauer-Emmett-Teller method) is calculated as the specific surface area ($m^2/g$).

The ratio of the content of palladium in the composite product according to the embodiment with respect to the total mass (100 mass%) of the composite product determined by X-ray fluorescence (XRF) analysis is preferably 0.1 mass% or more, more preferably 0.5 mass% or more, and still more preferably 1 mass% or more.

The composite product having the ratio of the content of palladium equal to or more than the lower limit value can more effectively exhibit catalytic efficiency derived from palladium.

As one example, the ratio of the content of palladium in the composite product according to the embodiment with respect to the total mass (100 mass%) of the composite product determined by the XRF analysis may be 20 mass% or less, 15 mass% or less, or 12 mass% or less.

As an example of the numerical value range of the value of the ratio of the content of palladium in the composite product according to the embodiment with respect to the total mass (100 mass%) of the composite product determined by the XRF analysis, the range may be 0.1 mass% or more and 20 mass% or less, 0.5 mass% or more and 15 mass% or less, or 1 mass% or more and 12 mass% or less.

The ratio of the content of molybdenum in the composite product according to the embodiment with respect to the total mass (100 mass%) of the composite product determined by X-ray fluorescence (XRF) analysis may be 30 mass% or more, 40 mass% or more, or 50 mass% or more.

As one example, the ratio of the content of molybdenum in the composite product according to the embodiment with respect to the total mass (100 mass%) of the composite product determined by the XRF analysis may be 80 mass% or less, 75 mass% or less, or 70 mass% or less.

As an example of the numerical value range of the value of the ratio of the content of molybdenum in the composite product according to the embodiment with respect to the total mass (100 mass%) of the composite product determined by the XRF analysis, the range may be 30 mass% or more and 80 mass% or less, 40 mass% or more and 75 mass% or less, or 50 mass% or more and 70 mass% or less.

The ratio of the content of sulfur in the composite product according to the embodiment to the total mass (100 mass%) of the composite product determined by X-ray fluorescence (XRF) analysis may be 15 mass% or more, 20 mass% or more, or 25 mass% or more.

As one example, the ratio of the content of sulfur in the composite product according to the embodiment with respect to the total mass of the composite product (100 mass%) determined by the XRF analysis may be 50 mass% or less, 45 mass% or less, or 40 mass% or less.

As an example of the numerical value range of the value of the ratio of the content of sulfur in the composite product according to the embodiment with respect to the total mass (100 mass%) of the composite product determined by the XRF analysis, the range may be 15 mass% or more and 50 mass% or less, 20 mass% or more and 45 mass% or less, or 25 mass% or more and 40 mass% or less.

Hereinafter, the details of the molybdenum disulfide particles and the palladium particles will be described.

<Molybdenum Disulfide Particles>

The molybdenum disulfide particles contained in the composite product according to the embodiment are composited with the palladium particles to form the composite product.

The shape of the primary particles of the molybdenum disulfide particle part in a two-dimensional image obtained by photographing the molybdenum disulfide particles in the composite product according to the embodiment with a transmission electron microscope (TEM) may be any shape. The shape is preferably a particle shape, a spherical shape, a plate shape, a needle shape, a string shape, a ribbon shape, or a sheet shape and more preferably the string shape, the ribbon shape, or the sheet shape. In the molybdenum disulfide particles, these shapes may be included in combination.

Here, the ribbon shape or the sheet shape means a thin-layer shape and the ribbon shape means a long thin-layer shape.

In the case where the shape of the primary particles of the molybdenum disulfide particle part is the string shape, the ribbon shape, or the sheet shape, the average thickness measured for 50 primary particles of the molybdenum disulfide particle part is preferably 100 nm or less, more preferably 50 nm or less, still more preferably 30 nm or less, and particularly preferably 15 nm or less.

As one example of the numerical range of the thickness, the measured average thickness of 50 primary particles of the molybdenum disulfide particle part may be 1 nm to 100 nm, 3 nm to 50 nm, 5 nm to 30 nm, or 5 to 15 nm in the case where the shape of the primary particles of the molybdenum disulfide particle part is the string shape, the ribbon shape, or the sheet shape.

The shape of the molybdenum disulfide particle part is preferably the string shape, the ribbon shape, or the sheet shape. The shape of 50 primary particles of the molybdenum disulfide particle part preferably has a size in the range of length (vertical) × width (horizontal) × thickness (height) of 50 nm to 1,000 nm × 50 nm to 1,000 nm × 3 nm to 100 nm on average, more preferably has a size in the range of 100 nm to 500 nm × 100 nm to 500 nm × 5 nm to 50 nm, and particularly preferably has a size in the range of 50 nm to 200 nm × 50 nm to 200 nm × 5 nm to 20 nm. The molybdenum disulfide particle part having the string shape, the ribbon shape, or the sheet shape allows the specific surface area of the molybdenum disulfide particle part to increase. The aspect ratio of the primary particles of the molybdenum disulfide particle part, that is, a value of (length (size of vertical and horizontal)/thickness (height)) is preferably 1.2 to 1,200, more preferably 2 to 800, still more preferably 5 to 400, and particularly preferably 10 to 200 on average of 50 particles.

The length, the width, and the thickness of the molybdenum disulfide particle part can be measured with an atomic force microscope (AFM).

The shape of the primary particles of the molybdenum disulfide particles is not a simple spherical shape, but the string shape, the ribbon shape, or the sheet shape having a large aspect ratio, whereby the specific surface area increases and the catalytic efficiency can be effectively improved.

The molybdenum disulfide particles contain molybdenum disulfide ($MoS_2$). The composite product according to the embodiment preferably contains molybdenum disulfide ($MoS_2$) in 50 mass% or more, more preferably contains in 80 mass% or more, and still more preferably contains in 85 mass% or more with respect to the total mass of the composite product (100 mass%).

The composite product having the ratio of the content of molybdenum disulfide equal to or more than the lower limit value allows the catalytic efficiency derived from molybdenum disulfide to be more effectively exhibited.

The upper limit value of the content of molybdenum disulfide ($MoS_2$) to the total mass (100 mass%) of the composite product may be determined to be such a value that the sum of the content of molybdenum disulfide ($MoS_2$), palladium (Pd), and optional components that may be contained in the composite product according to the embodiment does not exceed the total mass (100 mass%) of the composite product. As one example, the upper limit value may be 99.9 mass% or less, 99.5 mass% or less, or 99.0 mass% or less.

The content of molybdenum disulfide ($MoS_2$) described above may be a value determined by the XRF analysis and can be calculated as the sum of the molybdenum content and the sulfur content determined by the XRF analysis of the composite product according to the embodiment exemplified above.

As one embodiment, with respect to the total mass (100 mass%) of the composite product determined by the XRF analysis, a composite product in which the ratio of the content of palladium is 0.1 mass% or more and 20 mass% or less and the ratio of the content of molybdenum disulfide ($MoS_2$) is 80 mass% or more and 99.9 mass% or less may be exemplified, a composite product in which the ratio of the content of palladium is 0.5 mass% or more and 15 mass% or less and the ratio of the content of molybdenum disulfide ($MoS_2$) is 85 mass% or more and 99.5 mass% or less may be exemplified, or a composite product in which the ratio of the content of palladium is 1 mass% or more and 12 mass% or less and the ratio of the content of molybdenum disulfide ($MoS_2$) is 88 mass% or more and 99 mass% or less may be exemplified.

The composite product according to the embodiment can be provided as aggregates of the composite product particles (for example, powder). When the aggregates contain molybdenum disulfide ($MoS_2$), molybdenum sulfide particles containing one or more species of molybdenum sulfide represented by $MoS_x$ (X = 1 to 3) may be contained.

The values related to the average crystallite size, $D_{50}$, the specific surface area, and the XRF analysis as described above can be adopted from values measured using the aggregate of the composite product particles (for example, powder) as a sample.

A conversion rate $R_C$ to $MoS_2$ of the molybdenum disulfide particles is preferably 70% or more, more preferably 80% or more, and particularly preferably 90% or more. The conversion rate $R_C$ to $MoS_2$ equal to or more than the lower limit value allows the catalytic performance to be more effectively exhibited.

The conversion rate $R_C$ of the molybdenum disulfide particles to $MoS_2$ can be obtained by a reference intensity ratio (RIR) method based on profile data obtained by measuring the molybdenum disulfide particles with the X-ray diffraction (XRD). The conversion rate $R_C$ to $MoS_2$ can be obtained in accordance with the following formula (1) using the RIR value $K_A$ of molybdenum disulfide ($MoS_2$), the integrated intensity $I_A$ of a peak in the vicinity of $2\theta = 14.4° \pm 0.5°$ attributed to the plane (002) or the plane (003) of molybdenum disulfide ($MoS_2$), and the RIR value $K_B$ of each molybdenum oxide ($MoO_3$ as a raw material and $Mo_9O_{25}$, $Mo_4O_{11}$, $MoO_2$ as reaction intermediates), and integrated intensity $I_B$ of the strongest line peak of each molybdenum oxide ($MoO_3$ as the raw material and $Mo_9O_{25}$, $Mo_4O_{11}$, $MoO_2$ as the reaction intermediates).

$$R_C \ (\%) \ = \ (I_A/K_A)/(\Sigma(I_B/K_B)) \ \times \ 100 \ \cdots \ (1)$$

Here, values described in Inorganic Crystal Structure Database (ICSD) (manufactured by Japan Association for International Chemical Information) can be used as the RIR values, and integrated X-ray powder analysis software (PDXL2, manufactured by Rigaku Corporation) can be used for analysis.

As another aspect, molybdenum disulfide contained in the molybdenum disulfide particles may contain a 3R crystal structure or may contain a 2H crystal structure and the 3R crystal structure.

The molybdenum disulfide particles containing the 2H crystal structure and the 3R crystal structure as described above are a proprietary development product of the applicant and have not only the 2H structure but also the rare 3R (rhombohedral crystal) structure as the crystal structures thereof. The 3R structure tends to have a distorted crystal structure and thus has more catalytically active sites. Therefore, containing the 3R crystal structure in molybdenum disulfide contributes to improvement in catalytic performance.

The molybdenum disulfide particles containing the 3R crystal structure can be produced, for example, by <Method for Producing Molybdenum Disulfide Particles> described below. This method allows molybdenum disulfide containing the 3R structurer, which is difficult to achieve by grinding mined products or synthesizing from general-purpose molybdenum trioxide, having nano-meter scale structure, and being advantageous for forming a large surface area product to be synthesized.

The presence ratio of the 3R crystal structure in the crystal phase of molybdenum disulfide may be 5% or more and 60% or less, 10% or more and 60% or less, 20% or more and 60% or less, or 20% or more and 45% or less.

The fact that molybdenum disulfide particles have the 2H crystal structure and the 3R crystal structure can be confirmed, for example, by using extended Rietveld analysis software (High Score Plus, manufactured by Malvern Panalytical Ltd.), which can consider the crystallite size. In this Rietveld analysis software, not only the crystal structure types and ratios thereof calculated by the usual Rietveld analysis but also the crystallite size can be calculated by simulating the entire XRD diffraction profile using a crystal structure model including the crystallite size, comparing the result with XRD diffraction profiles obtained in experiments, optimizing the crystal lattice constants of the crystal structure model, crystal structure factors such as atomic coordinates, and weight fractions (presence ratios) by the least-squares method so that the residual between the experimentally obtained diffraction profiles and the calculated diffraction profiles is minimized, and identifying and quantifying each phase of the 2H crystal structure and the 3R crystal structure with high precision. Hereafter, in the present specification, the above analysis method using High Score Plus will be referred to as "extended Rietveld analysis".

In the molybdenum disulfide particles, the crystallite size of the 3R crystal structure obtained by the extended Rietveld analysis using the profiles obtained by the XRD may be 1 nm or more and 150 nm or less. The molybdenum disulfide particles are preferably formed of a crystal phase constituted of crystallite of 5 nm or more and 50 nm or less and the crystallite size is more preferably 10 nm or more and 40 nm or less.

In the molybdenum disulfide particles according to the present embodiment, the crystallite size of the 2H crystal structure obtained by the extended Rietveld analysis using the profiles obtained by the XRD is preferably 1 nm or more and 150 nm or less. The molybdenum disulfide particles are preferably formed of a crystal phase constituted of crystallite of 1 nm or more and 150 nm or less and the crystallite size is more preferably 5 nm or more and 150 nm or less.

The 2H crystal structure obtained by the extended Rietveld analysis is preferably formed of a single crystalline phase constituted of crystallites having a given crystallite size. In this case, the crystallite size of the 2H crystal structure is more preferably 1 nm or more and 20 nm or less and preferably 5 nm or more and 15 nm or less.

The crystallite size of the 2H crystal structure and the crystallite size of the 3R crystal structure can also be calculated using, for example, the FWHM of the peak of the XRD diffraction profile.

The presence ratio (2H:3R) of the 2H crystal structure and the 3R crystal structure in the crystal phase obtained by the extended Rietveld analysis using the profile obtained from the XRD is preferably 10:90 to 90:10.

From the viewpoint of the effect, the presence ratio (2H:3R) of the 2H crystal structure and the 3R crystal structure in the crystal phase obtained by the extended Rietveld analysis using the profile obtained from the XRD is more preferably 10:90 to 80:20 and still more preferably 40:60 to 80:20.

The 2H crystal structure obtained by the extended Rietveld analysis may be constituted of a first crystal phase constituted of crystallites having a given crystallite size and a second crystal phase having a smaller crystallite size than that of the first crystal phase. The crystallite size of the first crystal phase in the 2H crystal structure may be, for example, more than 20 nm and 150 nm or less, 50 nm or more and 150 nm or less, or 100 nm or more and 150 nm or less. However, it is preferable that the first crystal phase be not present in the crystal phase of the 2H crystal structure or the presence ratio thereof be small. The crystallite size of the second crystal phase in the 2H crystal structure is preferably 1 nm or more 20 nm or less, and may be 1 nm or more and 10 nm or less or 5 nm or more and 15 nm or less.

The crystallite size of the first crystal phase in the 2H crystal structure, the crystallite size of the 3R crystal structure, and the crystallite size of the second crystalline phase in the 2H crystal structure can also be calculated as described above, for example, using the FWHM of the XRD diffraction profile.

The presence ratio in the crystal phases of the first crystal phase in the 2H crystal structure, the 3R crystal structure, and the second crystal phase in the 2H crystal structure (2H (first crystal phase):3R:2H (second crystal phase)) obtained by the extended Rietveld analysis using the profile obtained from the XRD is preferably 30 to 0:10 to 70:80 to 15 and still more preferably 25 to 0:20 to 60:75 to 20.

In the profile of the molybdenum disulfide particles obtained from powder X-ray diffraction (XRD) using a Cu-K$\alpha$ ray as an X-ray source, it is preferable that the peaks in the vicinity of $2\theta = 39.5°$ and the peak in the vicinity of 49.5° be derived from the 2H crystal structure, the peaks in the vicinity of $2\theta = 32.5°$, the peak in the vicinity of 39.5°, and the peak in the vicinity of 49.5° be derived from the 3R crystal structure, and FWHMs of the peaks in the vicinity of $2\theta = 39.5°$ and the peak in the vicinity of 49.5° be 1° or more. Further, the molybdenum disulfide particles may contain crystal structures other than the 2H crystal structure and the 3R crystal structure of molybdenum disulfide, such as a 1H crystal structure.

The molybdenum disulfide particles have the 3R crystal structure which is a metastable structure, which can be distinguished by a fact that, in the profile obtained from the powder X-ray diffraction (XRD) using the Cu-K$\alpha$ rays as the X-ray source, both the peak in the vicinity of 39.5° and the peak in the vicinity of 49.5° include a synthetic peak of the 2H crystal structure and the 3R crystal structure.

In practice, the presence ratio of the 2H crystal structure is determined by the peak in the vicinity of $2\theta = 39.5°$ and the broad peak in the vicinity 49.5° using the profile obtained from the powder X-ray diffraction (XRD). In addition, the presence ratio of the 3R crystal structure is determined by optimizing the difference between the peak in the vicinity of $2\theta = 39.5°$ and the broad peak in the vicinity of 49.5° using two peaks in the vicinity of $2\theta = 32.5°$ and two peaks in the vicinity of 39.5°. In other words, both the peak in the vicinity of $2\theta = 39.5°$ and the peak in the vicinity of 49.5° are synthetic waves derived from the 2H crystal structure and the 3R crystal structure and the presence ratio of the 2H crystal structure and the 3R crystal structure in the molybdenum disulfide particles can be calculated using these synthetic waves.

The molybdenum disulfide particles may contain an amorphous phase. The presence ratio of the amorphous phase in the molybdenum disulfide particles is represented as 100 (%) - (Degree of crystallinity (%)) and is preferably 5% or more, more preferably 15% or more, and still more preferably 20% or more.

In a radial distribution function of the molybdenum disulfide particles obtained from an extended X-ray absorption fine structure (EXAFS) profile of a K absorption edge of molybdenum, a ratio (I/II) of peak intensity I caused by Mo-S to peak intensity II caused by Mo-Mo is preferably more than 1.0, more preferably 1.1 or more, and particularly preferably 1.2 or more.

In the crystal structure of molybdenum disulfide, the distance between Mo and S is almost the same in the 2H crystal structure and the 3R crystal structure due to a covalent bond, so that the peak intensity caused by Mo-S is the same in the 2H crystal structure and the 3R crystal structure in the extended X-ray absorption fine structure (EXAFS) profile of the K absorption edge of molybdenum. On the other hand, since the 2H crystal structure of molybdenum disulfide is hexagonal, the hexagon is located 90° directly below the same hexagon of Mo atoms, and thus the distance between Mo and Mo is shorter, and the peak intensity II caused by Mo-Mo is stronger.

Conversely, since the 3R crystal structure of molybdenum disulfide is rhombohedral, the hexagon that is not just below 90° but half offset from the hexagon is present, and thus the distance between Mo and Mo is longer, and the peak intensity II caused by Mo-Mo is weaker.

The ratio (I/II) is smaller in a pure 2H crystal structure of molybdenum disulfide, but the ratio (I/II) becomes larger as molybdenum disulfide has the 3R crystal structure.

<Palladium Particles>

The palladium particles contained in the composite product according to the embodiment are a granular structure containing palladium and are composited with the molybdenum disulfide particles to form the composite product.

The shape of the palladium particles is not particularly limited. Examples of the shape include a spherical shape, a hemispherical shape, a wire shape connecting a plurality of palladium particles to each other, and a shape in which these shapes are aggregated.

The contained form of the palladium particles in the composite product according to the embodiment is not particularly limited. The palladium particles may be present on the surface of the molybdenum disulfide particles or may be attached or bonded to the surface of the molybdenum disulfide particles.

The number of the palladium particles present per 100 nm × 100 nm surface area of the surface of the molybdenum disulfide particles observed on a two-dimensional image obtained by photographing the composite product with a transmission electron microscope (TEM) may be, for example, 5 particles to 5,000 particles or 10 particles to 1,000 particles.

The average particle diameter of the palladium particles may be 20 nm or less, 15 nm or less, or 13 nm or less.

As one example, the lower limit value of the average particle diameter of the palladium particles may be 0.5 nm or more, 0.7 nm or more, or 1 nm or more.

As one example of the numerical value range of the values of the average particle diameter of the palladium particles, the range may be 0.5 nm or more and 20 nm or less, 0.7 nm or more and 15 nm or less, or 1 nm or more and 13 nm or less.

As the average particle diameter of the palladium particles, the average value of measured maximum lengths in the distance between two points on the contour line of 50 randomly selected palladium particles (however, palladium particles in a state where a plurality of palladium particles are aggregated are not selected), which are identified on the two-dimensional image obtained by photographing the composite product with a transmission electron microscope (TEM) is adapted.

The palladium particles contain palladium. The contained form of palladium contained in the composite product according to the embodiment is not particularly limited. For example, palladium may be contained in the palladium particles as a palladium compound.

However, as described in Examples below, such results that the XRD pattern of the spectrum by the XRD analysis does not indicate the crystal structure of palladium metal crystal; a state where at least some palladium constitutes the palladium particles and the palladium particles are attached or bonded on the surface of the molybdenum disulfide particles is observed; the change in distance of the layer constituting molybdenum disulfide is not observed; and the valence of palladium is zero valence are obtained.

From these results, the palladium particles may contain palladium without having a crystalline structure. The palladium particles may contain palladium without having the crystal structure of the palladium metal crystal. The palladium particles may contain palladium that is not in a form substituted with a part of molybdenum in the crystal structure of molybdenum disulfide. The palladium particles may contain zero valence palladium.

With respect to the ratio of the content of palladium in the contained form described above, the palladium particles may contain 50% or more of palladium without having the crystal structure with respect to the palladium contained in the palladium particles in terms of mole. The palladium particles may contain 50% or more of palladium without having the crystal structure of the palladium metal crystal with respect to the palladium contained in the palladium particles in terms of mole. The palladium particles may contain 50% or more of palladium that is not in the form substituted with a part of molybdenum in the crystal structure of molybdenum disulfide with respect to the palladium contained in the palladium particles in terms of mole. The palladium particles may contain 50% or more of zero valence palladium with respect to the palladium contained in the palladium particles in terms of mole.

The palladium particles may contain aggregates of palladium atoms and may contain aggregates of palladium atoms without having the crystal structure. The palladium particles may contain aggregates of palladium atoms without having the crystal structure of the palladium metal crystal. The palladium particles may contain aggregates of palladium atoms that are not in the form substituted with a part of molybdenum in the crystal structure of molybdenum disulfide. The palladium particles may contain aggregates of zero valence palladium atoms.

Palladium contained in the palladium particles is preferably have no crystal structure and is more preferably have no crystal structure of the palladium metal crystal.

Similarly, the composite product according to the embodiment may contain palladium without having the crystal structure. The composite product according to the embodiment may contain palladium without having the crystal structure of the palladium metal crystal. The composite product according to the embodiment may contain palladium that is not in the form substituted with a part of molybdenum in the crystal structure of molybdenum disulfide. The composite product according to the embodiment may contain palladium of which valence is zero valence.

With respect to the ratio of the content of palladium in the above contained forms, the composite product according to the embodiment may contain 50% or more of palladium without having the crystal structure with respect to the palladium contained in the composite product in terms of mole. The composite product according to the embodiment may contain 50% or more of palladium without having the crystal structure of the palladium metal crystal with respect to the palladium contained in the composite product in terms of mole. The composite product according to the embodiment may contain 50 % or more of palladium that is not in the form substituted with a part of molybdenum in the crystal structure of molybdenum disulfide with respect to the palladium contained in the composite product in terms of mole. The composite product according to the embodiment may contain 50% or more of palladium of which valence is zero valence with respect to the palladium contained in the composite product in terms of mole.

Similarly, the composite product according to the embodiment may contain aggregates of palladium atoms without having the crystal structure. The composite product according to the embodiment may contain aggregates of palladium atoms without having the crystal structure of the palladium metal crystal. The composite product according to the embodiment may contain aggregates of palladium atoms that are not in the form substituted with a part of molybdenum in the crystal structure of molybdenum disulfide. The composite product according to the embodiment may contain aggregates of palladium atoms of which valence is zero valence.

The palladium contained in the composite product according to the embodiment preferably has no crystalline structure more preferably has no crystal structure of the palladium metal crystal.

As another aspect, the composite product according to the embodiment containing the molybdenum disulfide particles and the palladium particles, in which the average crystallite size of the molybdenum disulfide contained in the molybdenum disulfide particles determined from the peak at $2\theta = 14.4° \pm 0.5°$ obtained by X-ray diffraction measurement is 150 nm or less (however, those in which the palladium contained in the composite product has the crystal structure of the palladium metal crystal are excluded) is exemplified.

Palladium in the composite product according to the embodiment may form palladium clusters. The palladium in the palladium particles may also form the palladium clusters.

The presence of crystal structures containing palladium can be detected based on diffraction profiles obtained from analysis by X-ray diffraction using the composite product according to the embodiment as a sample. The presence can also be detected based on the analysis of the crystal structure by electron diffraction.

According to the composite product according to the embodiment described above, the molybdenum disulfide particles having such a fine crystallite size that the average crystallite size is 150 nm or less and palladium particles are composited together, whereby excellent catalytic performance can be exhibited.

Furthermore, it is conceivable that more excellent catalytic performance can be exhibited when palladium in the palladium particles does not form the crystal structure of the palladium metal crystal and is preferably present as the aggregates of palladium (Pd) atoms in the molybdenum disulfide particles.

The composite product according to the embodiment can be suitably used as a catalyst, particularly as a hydrogen generating catalyst applied to water electrolysis and the like.

The composite product according to the embodiment can be suitably used as a constituent material of a catalyst ink capable of forming a catalyst layer.

The composite product according to the embodiment can be suitably used as an electrode material used as a constituent material of the electrocatalyst layer.

<<Method for Producing Composite Product>>

The method for producing the composite product according to the embodiment includes a step of mixing molybdenum disulfide particles and a palladium solution, in which an average crystallite size of molybdenum disulfide included in the molybdenum disulfide particles determined from a peak of $2\theta = 14.4° \pm 0.5°$ obtained by X-ray diffraction measurement is 150 nm or less.

According to the method for producing the composite product according to the embodiment, the composite product according to the embodiment can be produced.

Examples of the molybdenum disulfide particles include the particles exemplified in above <<Composite Product>>.

The palladium solution can be obtained by dissolving any palladium source in a solvent.

As the palladium source, any palladium source that can produce the palladium solution may be used. Examples of the palladium source include palladium compound such as palladium acetate, palladium nitrate, palladium nitrite, palladium sulfate, palladium carbonate, palladium chloride, palladium hydroxide, and palladium oxide.

As the solvent, any solvent that can dissolve the palladium source may be used. Examples of the solvent include alcohols such as methanol, benzene, dichloromethane, acetone, and chloroform.

The method for mixing is not particularly limited. The palladium solution is preferably mixed with the dispersion liquid of the molybdenum disulfide particles.

The dispersion liquid of the molybdenum disulfide particles can be obtained by mixing the molybdenum disulfide particles with the solvent exemplified in the palladium solution described above.

The composite product of the molybdenum disulfide particles and the palladium particles can be formed by bringing the molybdenum disulfide particles into contact with the palladium solution by mixing the palladium solution and the molybdenum disulfide particles to obtain a mixture.

From the viewpoint of preventing aggregation of the molybdenum disulfide particles, for example, the mixture of the palladium solution and the molybdenum disulfide particles is preferably stirred. As the degree of the stirring, 50 rpm to 1,000 rpm may be exemplified.

The concentration of palladium in the palladium solution may be, for example, 0.00001 mol/L to 0.1 mol/L or 0.0001 mol/L to 0.01 mol/L.

The temperature of the mixture of the molybdenum disulfide particles and the palladium solution may be as high as possible to form the composite product. As one example, the temperature may be 10°C to 100°C or 20°C to 80°C.

The retention time of the mixture of the molybdenum disulfide particles and the palladium solution is as long as possible to form the composite product. As one example, the time may be 10 minutes or more and within 48 hours or 30 minutes or more and within 12 hours.

In the method for producing the composite product according to the embodiment, light irradiation may be performed to the mixture of the molybdenum disulfide particles and the palladium solution in order to promote photoreduction of palladium. The light irradiation can be performed by appropriately selecting the light intensity and wavelength to the extent that photoreduction of palladium occurs. The light irradiation may be performed by installing a light source and controlling the degree of light, or may be the irradiation of light from the normal indoor environment (by fluorescent lamps, LEDs, or other lightings) or the irradiation of natural light.

The method for producing molybdenum disulfide described below includes the operation of heating in the production step. However, the composite product can be produced without performing the heat treatment in the method for producing the composite product according to the embodiment. For example, the obtained composite product and the mixture of the palladium solution and the molybdenum disulfide particles is preferably not heated at 200°C or higher, more preferably not heated at 100°C or higher, and still more preferably not heated 80°C or higher.

After the composite product is formed from the above mixture, the composite product can be isolated by performing treatment such as centrifugation and drying to easily collect the composite product according to the embodiment.

The method for producing the composite product according to the embodiment can further include a molybdenum disulfide particle production process to produce the molybdenum disulfide particles.

Hereinafter, one example of method for producing the molybdenum disulfide particles will be described.

<Method for Producing Molybdenum Disulfide Particles>

The molybdenum disulfide particles can be produced by, for example, a molybdenum disulfide particle production process including heating molybdenum trioxide particles having an average particle diameter of the primary particles of 2 nm or more and 1,000 nm or less at a temperature of 200°C to 1,000°C in the presence of a sulfur source.

As another aspect, the molybdenum disulfide particles can be produced by, for example, a molybdenum disulfide particle production process including heating molybdenum trioxide particles obtained by the molybdenum trioxide particle production process described below at a temperature of 200°C to 1,000°C in the presence of the sulfur source.

The average particle diameter of the primary particles of the molybdenum trioxide particles refers to an average value of primary particle diameters of 50 primary particles randomly selected when the molybdenum trioxide particles are photographed with a scanning electron microscope (SEM) or a transmission electron microscope (TEM), the major axis (the Feret diameter of the longest portion observed) and the minor axis (the short Feret diameter in a direction perpendicular to the Feret diameter of the longest portion) of the minimum unit particles (that is, the primary particles) constituting aggregates on a two-dimensional image are measured, and an average value thereof is defined as the primary particle diameter.

In the method for producing molybdenum disulfide particles, the average particle diameter of the primary particles of the molybdenum trioxide particles is preferably 1 $\mu$m or less. From the viewpoint of the reactivity with sulfur, the average particle diameter is more preferably 600 nm or less, still more preferably 400 nm or less, and particularly preferably 200 nm or less. The average particle diameter of the primary particles of the molybdenum trioxide particles may be 2 nm or more, 5 nm or more, or 10 nm or more.

The molybdenum trioxide particles used for producing the molybdenum disulfide particles are preferably made of an aggregate of primary particles having a $\beta$ crystal structure of molybdenum trioxide. Since the molybdenum trioxide particles have better reactivity with sulfur than molybdenum trioxide particles having only $\alpha$ crystals as a crystal structure in the related art, and contain molybdenum trioxide having a $\beta$ crystal structure, the conversion rate $R_C$ to $MoS_2$ can be increased in a reaction with the sulfur source.

The $\beta$ crystal structure of molybdenum trioxide can be observed by the presence of a peak (in the vicinity of $2\theta$: 23.01°, No. 86426 (inorganic crystal structure database, ICSD)) attributed to the plane (011) of the $\beta$ crystal of $MoO_3$ in a profile obtained by the powder X-ray diffraction (XRD) using the Cu-K$\alpha$ rays as the X-ray source. The $\alpha$ crystal structure of molybdenum trioxide can be observed by the presence of a peak of the plane (021) (in the vicinity of $2\theta$: 27.32°, No. 166363 (inorganic crystal structure database, ICSD)) of the $\alpha$ crystal of $MoO_3$.

The molybdenum trioxide particles preferably have a ratio ($\beta$ (011)/$\alpha$ (021)) of the intensity of a peak attributed to the plane (011) of the $\beta$ crystal of $MoO_3$ to the intensity of a peak attributed to the plane (021) (in the vicinity of $2\theta$: 27.32°, No. 166363 (inorganic crystal structure database, ICSD)) of the $\alpha$ crystal of $MoO_3$ of 0.1 or more in the profile obtained by the powder X-ray diffraction (XRD) using the Cu-K$\alpha$ rays as the X-ray source.

From the peak intensity attributed to the plane (011) of the $\beta$ crystal of $MoO_3$ and the intensity of the peak attributed to the plane (021) of the $\alpha$ crystal of $MoO_3$, each maximum peak intensity is read to obtain the ratio ($\beta$ (011) /$\alpha$ (021)).

In the molybdenum trioxide particles, the ratio ($\beta$ (011)/$\alpha$ (021)) is preferably 0.1 to 10.0, more preferably 0.2 to 10.0, and particularly preferably 0.4 to 10.0.

The $\beta$ crystal structure of molybdenum trioxide can also be observed by the presence of peaks at wavenumbers of 773 cm$^{-1}$, 848 cm$^{-1}$, and 905 cm$^{-1}$ in a Raman spectrum obtained by Raman spectroscopy. The $\alpha$ crystal structure of molybdenum trioxide can be observed by the presence of peaks at wavenumbers of 663 cm$^{-1}$, 816 cm$^{-1}$, and 991 cm$^{-1}$.

The average particle diameter of the primary particles of the molybdenum trioxide particles may be 5 nm or more and 2,000 nm or less.

Examples of the sulfur source include sulfur and hydrogen sulfide, which may be used alone or in combination of two.

The method for producing the molybdenum disulfide particles may include heating the molybdenum trioxide particles formed of the aggregate of the primary particles containing molybdenum trioxide having a $\beta$ crystal structure at a temperature of 100°C to 800°C in the absence of the sulfur source, and then heating the molybdenum trioxide particles at a temperature of 200°C to 1,000°C in the presence of the sulfur source.

The heating time in the presence of the sulfur source may be 1 hour to 20 hours, 2 hours to 15 hours, or 3 hours to 10 hours as long as the sulfurization reaction proceeds sufficiently.

In the method for producing the molybdenum disulfide particles, the feed ratio of the amount of S in the sulfur source to the amount of $MoO_3$ in the molybdenum trioxide particles is preferably set under conditions under which the sulfurization reaction proceeds sufficiently. With respect to 100 mol% of the amount of $MoO_3$ in the molybdenum trioxide particles, the amount of S in the sulfur source is preferably 450 mol% or more, more preferably 600 mol% or more, and still more preferably 700 mol% or more. With respect to 100 mol% of the amount of $MoO_3$ in the molybdenum trioxide particles, the amount of S in the sulfur source may be 3,000 mol% or less, 2,000 mol% or less, or 1,500 mol% or less.

In the method for producing the molybdenum disulfide particles, the heating temperature in the presence of the sulfur source may be any temperature at which the sulfurization reaction proceeds sufficiently, and is preferably 320°C or higher, more preferably 340°C or higher, and still more preferably 360°C or higher. The heating temperature may be 320°C to 1,000°C, 340°C to 1,000°C, or 360°C to 500°C. Setting the above heating temperature to a lower temperature allows the degree of crystallinity of the molybdenum disulfide particles to be lowered and the presence ratio of the amorphous phase to increase.

In the method for producing molybdenum disulfide particles, the obtained molybdenum disulfide particles may be cooled if necessary and then heated as the post-treatment. In this heating treatment, for example, the molybdenum disulfide particles are preferably calcined under an inert atmosphere. Heating and calcining the obtained molybdenum disulfide particles promote crystallization of the amorphous phase and increases the degree of crystallinity. With increasing the degree of crystallinity, each new 2H crystal structure and 3R crystal structure is generated and the presence ratio of the 2H crystal structure and the 3R crystal structure changes. As described above, reheating as the post-treatment can increase the presence ratio of the 3R crystal structure. The ratio of the 2H crystal structure to the 3R crystal structure can be adjusted by changing the temperature when the obtained molybdenum disulfide particles are heated.

When the obtained molybdenum disulfide particles are heated and calcined equal to or more than the predetermined temperature to convert the amorphous phase into the 2H crystal structure, the second crystalline phase constituted of crystallites having a crystallite size of 20 nm or less and preferably 10 nm or less is newly generated. At this time, in the case where crystallites having a crystallite size of 10 nm or less are present in the 2H crystal structure before heating the molybdenum disulfide particles, such crystallites grow to a crystallite size of 100 nm or more after heating the molybdenum disulfide particles, and the first crystal phase constituted of these grown crystallites is generated.

From the viewpoint of keeping the presence ratio of the first crystal phase of the 2H crystal structure as low as possible while increasing the presence ratio of the crystal phase of the 3R crystal structure, the heating temperature of the molybdenum disulfide particles in the post-treatment is preferably 500°C to 900°C and more preferably 500°C to 800°C.

The heating rate of the molybdenum disulfide particles in the post-treatment is preferably 1°C/min or more and 50°C/min or less and more preferably 2°C/min or more and 10°C/min or less.

In the method for producing molybdenum disulfide particles, the content ratio of $MoO_3$ in the molybdenum trioxide particles measured by X-ray fluorescence (XRF) is preferably 99.5% or more. This allows the conversion rate $R_C$ to $MoS_2$ to increase and molybdenum disulfide having high purity and favorable storage stability, which is not likely to generate disulfide derived from impurities, to be obtained.

The molybdenum trioxide particles preferably have a specific surface area of 10 m$^2$/g to 100 m$^2$/g measured by the BET method.

In the molybdenum trioxide particles, the specific surface area is preferably 10 m$^2$/g or more, more preferably 20 m$^2$/g or more, and still more preferably 30 m$^2$/g or more from the viewpoint of reactivity with sulfur. In the molybdenum trioxide particles, the specific surface area is preferably 100 m$^2$/g and may be 90 m$^2$/g or 80 m$^2$/g from the viewpoint of facilitation in production.

In the molybdenum trioxide particles, the ratio (I°/II°) of peak intensity I° caused by Mo-O to peak intensity II° caused by Mo-Mo is preferably more than 1.1 in the radial distribution function obtained from the extended X-ray absorption fine structure (EXAFS) profile of the K absorption edge of molybdenum.

As for the peak intensity I° caused by Mo-O and the peak intensity II° caused by Mo-Mo, each maximum peak intensity is read to obtain the ratio (I°/II°). The ratio (I°/II°) is considered to indicate that the β crystal structure of MoO$^3$ is obtained in the molybdenum trioxide particles, and the greater the ratio (I°/II°), the better the reactivity with sulfur.

In the molybdenum trioxide particles, the ratio (I°/II°) is preferably 1.1 to 5.0, and may be 1.2 to 4.0 or 1.2 to 3.0.

(Method for Producing Molybdenum Trioxide Particles)

The method for producing the composite product according to the embodiment can further include a molybdenum trioxide production process to produce the molybdenum trioxide particles.

The molybdenum trioxide particles can be produced by the molybdenum trioxide production process including vaporizing a molybdenum oxide precursor compound to form molybdenum trioxide vapor and cooling the molybdenum trioxide vapor.

The method for producing a molybdenum trioxide particles includes calcining a raw material mixture containing a molybdenum oxide precursor compound and a metal compound other than the molybdenum oxide precursor compound to vaporize the molybdenum oxide precursor compound so as to form molybdenum trioxide vapor. The ratio of the metal compound with respect to 100 mass% of the raw material mixture is preferably 70 mass% or less in terms of oxide.

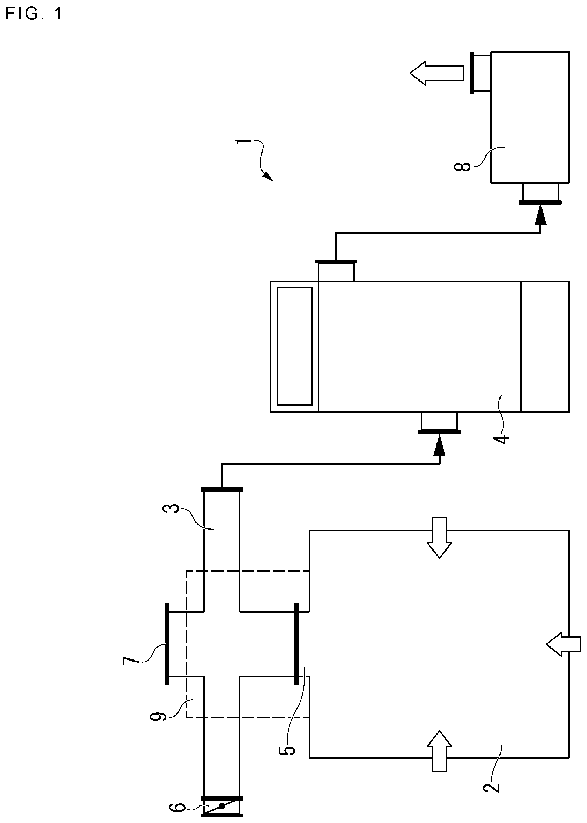

The method for producing molybdenum trioxide particles can be suitably carried out by using a production apparatus 1 illustrated in FIG. 1.

FIG. 1 is a schematic view of an example of an apparatus used for producing molybdenum trioxide particles serving as a raw material of the molybdenum disulfide particles according to the present embodiment.

As illustrated in FIG. 1, the production apparatus 1 includes a calcining furnace 2 for calcining the molybdenum trioxide precursor compound or the raw material mixture to vaporize the molybdenum trioxide precursor compound, a cross-shaped cooling pipe 3 connected to the calcining furnace 2 for forming particles from the molybdenum trioxide vapor vaporized by the calcining, and a collection device 4 as a collection unit for collecting the molybdenum trioxide particles formed as a particle form in the cooling pipe 3. At this time, the calcining furnace 2 and the cooling pipe 3 are connected to each other via a discharge port 5. Further, in the cooling pipe 3, an opening degree adjustment damper 6 is disposed at an outside air intake port (not shown) at a left end portion, and an observation window 7 is disposed at an upper end portion. An air exhauster 8, which is a first air blowing unit, is connected to the collection device 4. When the air exhauster 8 exhausts air, air in the collection device 4 and the cooling pipe 3 is suctioned, and the outside air is blown into the cooling pipe 3 from the opening degree adjustment damper 6 of the cooling pipe 3. That is, the air exhauster 8 passively blows air to the cooling pipe 3 by exhibiting a suction function. In addition, the production apparatus 1 may include an external cooling device 9, which makes it possible to freely control cooling conditions for the molybdenum trioxide vapor generated from the calcining furnace 2.

The opening degree adjustment damper 6 opens to take in air from the outside air intake port and the molybdenum trioxide vapor vaporized in the calcining furnace 2 is cooled in an air atmosphere to obtain molybdenum trioxide particles, whereby the ratio (I°/II°) can be made more than 1.1, and the β crystal structure of $MoO_3$ can be easily obtained in the molybdenum trioxide particles. When the molybdenum trioxide vapor is cooled in a state where an oxygen concentration in a nitrogen atmosphere is low, for example, when the molybdenum trioxide vapor is cooled using liquid nitrogen, the oxygen defect density is likely to increase and the ratio (I°/II°) is likely to decrease.

The molybdenum oxide precursor compound is not particularly limited as long as it forms molybdenum trioxide vapor by being calcined, and examples thereof include metal molybdenum, molybdenum trioxide, molybdenum dioxide, molybdenum sulfide, ammonium molybdate, phosphomolybdic acid ($H_3PMo_{12}O_{40}$), silicomolybdic acid ($H_4SiMo_{12}O_{40}$), aluminum molybdate, silicon molybdate, magnesium molybdate ($MgMo_nO_{3n+1}$ (n = 1 to 3)), sodium molybdate ($Na_2Mo_nO_{3n+1}$ (n = 1 to 3)), titanium molybdate, ferric molybdate, potassium molybdate ($K_2Mo_nO_{3n+1}$ (n = 1 to 3)), zinc molybdate, boron molybdate, lithium molybdate ($Li_2Mo_nO_{3n+1}$ (n = 1 to 3)), cobalt molybdate, nickel molybdate, manganese molybdate, chromium molybdate, cesium molybdate, barium molybdate, strontium molybdate, yttrium molybdate, zirconium molybdate, and copper molybdate. These molybdenum oxide precursor compounds may be used alone or in combination of two or more thereof. The form of the molybdenum oxide precursor compound is not particularly limited, and for example, the molybdenum oxide precursor compound may be in a powder form such as molybdenum trioxide, or may be in a liquid form such as an aqueous solution of ammonium molybdate. The molybdenum oxide precursor compound is preferably in the powder form having good handling properties and good energy efficiency.

As the molybdenum trioxide precursor compound, commercially available α-crystal molybdenum trioxide is particularly preferably used. Further, when ammonium molybdate is used as the molybdenum oxide precursor compound, the ammonium molybdate is converted by calcining into molybdenum trioxide that is thermodynamically stable, and thus the molybdenum oxide precursor compound to be vaporized becomes molybdenum trioxide.

The molybdenum trioxide vapor can also be formed by calcining a raw material mixture containing a molybdenum oxide precursor compound and a metal compound other than the molybdenum oxide precursor compound.

Among these, the molybdenum oxide precursor compound preferably contains molybdenum trioxide from the viewpoint of easily controlling the purity of the obtained molybdenum trioxide particles, the average particle diameter of the primary particles, and the crystal structure.

The molybdenum oxide precursor compound and the metal compound other than the molybdenum oxide precursor compound may form an intermediate, but even in this case, the intermediate is decomposed by calcining, and molybdenum trioxide can be vaporized in a thermodynamically stable form.

Among these compounds used as the metal compound other than the molybdenum oxide precursor compound, an aluminum compound is preferably used to prevent damage to a calcining furnace, and the metal compound other than the molybdenum oxide precursor compound may not be used to improve the purity of the molybdenum trioxide particles.

The metal compound other than the molybdenum oxide precursor compound is not particularly limited, and examples thereof include an aluminum compound, a silicon compound, a titanium compound, a magnesium compound, a sodium compound, a potassium compound, a zirconium compound, an yttrium compound, a zinc compound, a copper compound, and an iron compound. Among these, it is preferable to use the aluminum compound, the silicon compound, the titanium compound, or the magnesium compound as the metal compound.

The molybdenum oxide precursor compound and the metal compound other than the molybdenum oxide precursor compound may form an intermediate, but even in this case, the intermediate is decomposed by calcining, and molybdenum trioxide can be vaporized in a thermodynamically stable form.

As the metal compound other than the molybdenum oxide precursor compound, an aluminum compound is preferably used to prevent damage to a calcining furnace. In the production method, the metal compound other than the molybdenum oxide precursor compound may not be used to improve the purity of the molybdenum trioxide powder.

Examples of the aluminum compound include aluminum chloride, aluminum sulfate, basic aluminum acetate, aluminum hydroxide, boehmite, pseudo-boehmite, transition aluminum oxides (γ-aluminum oxide, δ-aluminum oxide, θ-aluminum oxide, etc.), α-aluminum oxide, and a mixed aluminum oxide having two or more crystal phases.

When a raw material mixture containing the molybdenum oxide precursor compound and the metal compound other than the molybdenum oxide precursor compound is calcined, the content ratio of the molybdenum oxide precursor compound is preferably 40 mass% or more and 100 mass% or less, and may be 45 mass% or more and 100 mass% or less or 50 mass% or more and 100 mass% or less with respect to 100 mass% of the raw material mixture.

The calcining temperature varies depending on the molybdenum oxide precursor compound, the metal compound, and the like to be used, and the desired molybdenum trioxide particles, and is usually preferably a temperature at which the intermediate can be decomposed. For example, since aluminum molybdate can be formed as an intermediate when a molybdenum compound is used as the molybdenum oxide precursor compound and an aluminum compound is used as the metal compound, the calcining temperature is preferably 500°C to 1500°C, more preferably 600°C to 1550°C, and still more preferably 700°C to 1600°C.

The calcining time is not particularly limited, and may be, for example, 1 minute to 30 hours, 10 minutes to 25 hours, or 100 minutes to 20 hours.

The temperature rising rate varies depending on the molybdenum oxide precursor compound and the metal compound to be used, and the properties of the desired molybdenum trioxide particles, and is preferably 0.1°C/minute to 100°C/minute, more preferably 1°C/minute to 50°C/minute, and still more preferably 2°C/minute to 10°C/minute from the viewpoint of production efficiency.

The internal pressure in the calcining furnace is not particularly limited, and may be a positive pressure or a reduced pressure, but from the viewpoint of suitably discharging the molybdenum oxide precursor compound from the calcining furnace to the cooling pipe, the calcining is preferably performed under a reduced pressure. Specifically, the degree of pressure reduction is preferably -5,000 Pa to -10 Pa, more preferably -2,000 Pa to -20 Pa, and still more preferably -1,000 Pa to -50 Pa. When the degree of pressure reduction is -5,000 Pa or more, high airtightness and mechanical strength of the calcining furnace are not excessively required, and production costs can be reduced, which is preferable. When the degree of pressure reduction is -10 Pa or less, clogging of the molybdenum oxide precursor compound at a discharge port of the calcining furnace can be prevented, which is preferable.

When a gas is blown into the calcining furnace during calcining, the temperature of the blown gas is preferably 5°C to 500°C, and more preferably 10°C to 100°C.

Further, the blowing speed of the gas is preferably 1 L/min ore more and 500 L/min or less, and more preferably 10 L/min or more and 200 L/min or less with respect to 100 L of an effective volume of the calcining furnace.

The temperature of the vaporized molybdenum trioxide vapor varies depending on the type of the molybdenum oxide precursor compound to be used, and is preferably 200°C to 2000°C, and more preferably 400°C to 1500°C. When the temperature of the vaporized molybdenum trioxide vapor is 2,000°C or lower, usually, the vapor tends to be easily turned into a particles by blowing outside air (0°C to 100°C) to the cooling pipe.

The discharge rate of the molybdenum trioxide vapor discharged from the calcining furnace can be controlled based on the amount of the molybdenum oxide precursor compound to be used, the amount of the metal compound to be used, the temperature of the calcining furnace, blowing of the gas into the calcining furnace, and the diameter of the discharge port of the calcining furnace. The discharge rate of the molybdenum trioxide vapor discharged from the calcining furnace to the cooling pipe varies depending on the cooling capacity of the cooling pipe, and is preferably 0.001 g/min or more and 100 g/min or less, and more preferably 0.1 g/min or more and 50 g/min or less.

Further, the content of the molybdenum trioxide vapor contained in the gas discharged from the calcining furnace is preferably 0.01 mg/L or more and 1,000 mg/L or less, and more preferably 1 mg/L or more and 500 mg/L or less.

Next, the molybdenum trioxide vapor is cooled to form particles.

The molybdenum trioxide vapor is cooled by lowering the temperature of the cooling pipe. In this case, examples of a cooling method include cooling by blowing a gas into the cooling pipe as described above, cooling by a cooling mechanism included in the cooling pipe, and cooling by an external cooling device.

The molybdenum trioxide vapor is preferably cooled in an air atmosphere. When the molybdenum trioxide vapor is cooled in an air atmosphere to form molybdenum trioxide particles, the ratio (I°/II°) can be made more than 1.1, and the $\beta$ crystal structure of $MoO_3$ can be easily obtained in the molybdenum trioxide particles.

The cooling temperature (temperature of the cooling pipe) is not particularly limited, and is preferably -100°C to 600°C, and more preferably -50°C to 400°C.

The cooling rate of the molybdenum trioxide vapor is not particularly limited, and is preferably 100°C/s or more and 100,000°C/s or less, and more preferably 1,000°C/s or more and 50,000°C/s or less. As the cooling rate of the molybdenum trioxide vapor increases, molybdenum trioxide particles having a small particle diameter and a large specific surface area tend to be obtained.

When the cooling method is cooling by blowing a gas into the cooling pipe, the temperature of the blown gas is preferably -100°C to 300°C, and more preferably -50°C to 100°C.

Further, the blowing speed of the gas is preferably 0.1 $m^3$/min or more and 20 $m^3$/min or less, and more preferably 1 $m^3$/min or more and 10 $m^3$/min or less. When the blowing speed of the gas is 0.1 $m^3$/min or more, a high cooling rate can be achieved, and clogging in the cooling pipe can be prevented, which is preferable. In contrast, when the blowing speed of the gas is 20 $m^3$/min or less, the first air blowing unit (such as an air exhauster) which is expensive is no longer needed, and production costs can be reduced, which is preferable.

The particles obtained by cooling the molybdenum trioxide vapor are transported to the collection device for collection.

In the method for producing a molybdenum trioxide particles, the particles obtained by cooling the molybdenum trioxide vapor may be calcined again at a temperature of 100°C to 320°C.

That is, the molybdenum trioxide particles obtained by the method for producing molybdenum trioxide particles may be calcined again at a temperature of 100°C to 320°C. The calcining temperature in the re-calcining may be 120°C to 280°C or 140°C to 240°C. A calcining time in the re-calcining may be, for example, 1 minute to 4 hours, 10 minutes to 5 hours, or 100 minutes to 6 hours. However, a part of the β crystal structure of molybdenum trioxide disappears due to re-calcining , and when calcining is performed at a temperature of 350°C or higher for 4 hours, the β crystal structure of the molybdenum trioxide particles disappears, the ratio (β (011)/α (021)) is 0, and the reactivity with sulfur is impaired.

With the method for producing molybdenum trioxide particles as described above, the molybdenum trioxide particles suitable for producing the molybdenum disulfide particles can be produced.

<<Hydrogen Generation Catalyst>>

The composite product according to the embodiment can be suitably used as a catalyst for the hydrogen evolution reaction (HER) (herein also referred to as "hydrogen generation catalyst"). Also, the composite product according to the embodiment can be used as the hydrogen generation catalyst used together with the conductive material. That is, preferable examples of the hydrogen generation catalyst include a substance containing the composite product according to the embodiment. The hydrogen generation catalyst may further contain the conductive material in addition to the composite product according to the embodiment. The catalytic activity of the hydrogen generation catalyst containing the composite product according to the embodiment and the conductive material in the hydrogen evolution reaction (HER) is higher.

The conductive material may be a publicly known conductive material.

Examples of the conductive material include carbon and a metal that have high conductivity.

The hydrogen generation catalyst may contain only one type of the conductive material or two or more types thereof.

Examples of the carbon include carbon black such as acetylene black, Cabot carbon black, and Ketjen Black, graphite, carbon fibers, and metal powders. Ketjen Black has a high specific surface area and conductivity, and is excellent from the viewpoint of suppressing aggregation of molybdenum sulfide.

Examples of the metal that is the conductive material include gold, silver, copper, aluminum, rhodium, molybdenum, tungsten, iron, nickel, cobalt, and indium.

The metal serving as the conductive material, which is different from palladium in the composite product according to the embodiment, is merely mixed with the composite product according to the embodiment in the hydrogen generation catalyst.

The hydrogen generation catalyst may contain only one type of the metal that is the conductive material or two or more types thereof.

As the conductive material, for example, the hydrogen generation catalyst may contain the carbon and no metal, may contain the metal and no carbon, or may contain both the metal and the carbon.

The content of the conductive material in the hydrogen generation catalyst is preferably 0.1 part by mass to 100 parts by mass and more preferably 0.5 part by mass to 50 parts by mass with respect to a content of 100 parts by mass of the composite product according to the embodiment.

The ratio of the total content of the composite product according to the embodiment and the conductive material in the hydrogen generation catalyst to the whole mass (100 mass%) of the hydrogen generation catalyst is preferably 80 mass% or more, more preferably 90 mass% or more, and still more preferably 95 mass% or more, and may be, for example, any of 97 mass% or more and 99 mass% or more, or 100 mass%. When the ratio is equal to or more than the lower limit value, the catalytic activity of the hydrogen generation catalyst in the hydrogen evolution reaction (HER) is higher. The ratio may be 100 mass% or less.

<<Catalyst Ink>>

The hydrogen generation catalyst is suitable for use as a component contained in a catalyst ink.

The catalyst ink according to the embodiment includes the composite product according to the embodiment and a solvent.

The catalyst ink according to the embodiment can include the composite product according to the embodiment, a polyelectrolyte, and a solvent.

The catalyst ink according to the present embodiment may further include a conductive material. The types and contents of conductive materials include those exemplified above.

The catalyst ink can be applied to, for example, a substrate for a working electrode to form a catalyst layer.

As the polyelectrolyte, polyelectrolytes generally used in formation of a catalyst layer can be used. Specific examples thereof include a perfluorocarbon polymer having a sulfonic acid group (for example, Nafion (registered trademark)), a hydrocarbon-based polymer compound having a sulfonic acid group, a polymer compound doped with an inorganic acid such as phosphoric acid, organic/inorganic hybrid polymers partially substituted with proton-conducting functional groups, and a proton conductor in which a polymer matrix is impregnated with a phosphoric acid solution or a sulfuric acid solution.

Examples of the solvent include a solvent that is capable of dispersing the composite product according to the embodiment and being applied to the substrate for a working electrode to form a catalyst layer. Preferred examples of the solvent include alcohols such as 1-propanol, 2-propanol, 1-butanol, 2-butanol, 1-pentanol, 2-pentanol, 1-hexanol, 2-hexanol, 1-heptanol, and 2-heptanol.

[Examples]

Next, the invention will be described in more detail with reference to Examples, but the invention is not limited to the following Examples.

[Synthesis Example 1] (Reference Example)

(Production of Molybdenum Trioxide Particles)

A calcining furnace equivalent to a heat-resistant vessel, a cooling pipe provided with an outside air supply port, and a dust collector to collect the molybdenum oxide were prepared. An RHK simulator (manufactured by Noritake Co., Ltd.) was used as the calcining furnace, and a VF-5N dust collector (manufactured by AMANO Corporation) was used as the dust collector to produce molybdenum oxide.

1.5 kg of aluminum hydroxide (manufactured by Nippon Light Metal Company, Ltd.) and 1 kg of molybdenum trioxide (manufactured by Nippon Muki Co., Ltd.) were mixed and then fed in a saggar. The calcining furnace, the cooling pipe, and dust collector were connected to calcine the resultant mixture at a temperature of 1,100°C for 10 hours. During the calcining, outside air (blowing speed: 150 L/min, outside air temperature: 25°C) was introduced from a side surface and a lower surface of the calcining furnace. Molybdenum trioxide was evaporated in the calcining furnace and then cooled in the vicinity of the dust collector to precipitate as particles. The precipitated molybdenum trioxide was collected with the dust collector.

After calcining, 1.0 kg of aluminum oxide, a blue powder, and 0.8 kg of molybdenum trioxide collected by the dust collector were taken out from the sagger.

The collected molybdenum trioxide had an average particle diameter of primary particles of 1 $\mu$m or less, and by X-ray fluorescence (XRF) measurement, it was found that the purity of molybdenum trioxide was 99.8%.

(Production of Molybdenum Disulfide Particles)

Into an alumina crucible, 40.0 g (277.9 mmol) of the molybdenum trioxide prepared above and 40.0 g (1,250 mmol, 4.5 equivalents to Mo atoms) of sulfur powder (manufactured by Kanto Chemical Co., Inc.) were placed, and the resultant mixture was mixed with a stirring rod so that the powders became uniform. After mixing, the crucible was covered with a lid and placed in a high-temperature atmosphere calcining furnace (SKM-2030P-OP, manufactured by made by Motoyama). Calcination was performed under nitrogen replacement after vacuuming in the furnace. As calcining conditions, temperature was raised from a room temperature of 25°C at a rate of 5°C/min and held for 4 hours after reaching 500°C. During the calcining process, nitrogen gas was blown at 0.5 L/min. Then, the furnace was allowed to cool down naturally to obtain 44.5 g of molybdenum disulfide particles.

(Production of Composite Product)

[Example 1]

100 mg of the molybdenum disulfide particles obtained in Synthesis Example 1 described above were mixed with 25 mL of methanol (CH$_3$OH, a reagent manufactured by Kanto Chemical Co., Inc.), and the resultant mixture was subjected to sonication treatment for 30 minutes to give a dispersion liquid in which the molybdenum disulfide particles were dispersed in methanol.

4.3 mg of palladium acetate (Pd(CH$_3$COO)$_2$, a reagent manufactured by Kanto Chemical Co., Inc.) was mixed with 25 mL of methanol to dissolve palladium acetate into methanol, and then the obtained solution was added to the above dispersion liquid in a stirred state. The dispersion liquid was then stirred at room temperature under light irradiation (under normal room light environment) for 2 hours or more to give a precipitate. This precipitate was collected by centrifugation, washed by sonication three times in water, and then dried under vacuum to give the composite product particles in Example 1.

[Examples 2 to 4]

Each of the composite product particles in Examples 2 to 4 was obtained in the same manner as the manner in Example 1 except that, in Example 1, the amounts of palladium acetate and methanol used (methanol was used in a half amount of each of the values listed in the table for each of the molybdenum disulfide particle dispersion liquid and palladium solution) were changed as listed in Table 1.

[Comparative Example 1]

Particles in Comparative Example 1 were obtained by the same manner as the manner in Example 2 except that, in Example 2, 100 mg of commercially available carbon black (KB) (manufactured by Lion Specialty Chemicals Corporation, Ketjen Black, product number: EC300J, median diameter $D_{50}$: 40 nm) was used instead of 100 mg of the molybdenum disulfide particles obtained in Synthesis Example 1.

[Comparative Example 2]

Commercially available molybdenum disulfide particles (manufactured by Kanto Chemical Co., Inc.) were used as particles in Comparative Example 2.

The following evaluations were performed on samples of each of the particles in Synthesis Example 1, Examples 1 to 4, and Comparative Examples 1 and 2.

<<Evaluation>>

[XRF Analysis]

About 20 mg to 30 mg of a sample was taken on a filter paper and covered with a PP film, and the composition of the sample was analyzed using an X-ray fluorescence analyzer Primus IV (manufactured by Rigaku Corporation). The amounts of palladium, the amounts of molybdenum, and the amounts of sulfur determined by XRF analysis results were determined as the palladium content (mass%), the molybdenum content (mass%), and the sulfur content (mass%) with respect to 100 mass% of the sample particles.

[Measurement of XRD Crystal Structure]

A sample was filled in a holder for a measurement sample having a depth of 0.5 mm, set in a wide-angle X-ray diffraction (XRD) apparatus (Ultima IV manufactured by Rigaku Corporation), and subjected to measurement under conditions of Cu/K$\alpha$ rays, 40 kV/40 mA, a scanning speed of $2\theta = 2°$/min, and a scanning range of $2\theta = 10°$ or more and 70° or less.

[Measurement of Crystallite Size]

The measurement was performed using SmartLab 9kV (manufactured by Rigaku Corporation) as an X-ray diffractometer, a scintillation counter detector as a detector, and PDXL2 as analysis software. The measurement method was a $2\theta/\theta$ method. The average crystallite size was calculated from the full width at half maximum (FWHM) of the peak appearing at $2\theta = 14.4° \pm 0.5°$ using the Scherrer formula. As the measurement conditions, the scanning speed ($2\theta$) was 2.0°/min, the scan range ($2\theta$) was 10° to 70°, the step ($2\theta$) was 0.02°, and the instrument standard width was determined to be zero.

[XPS Analysis]

Composition analysis was performed under the following conditions by using an X-ray photoelectron spectroscopy (XPS) apparatus (K-Alpha, manufactured by ThermoFisher Scientific, FEI Japan) and fixing the sample on a carbon tape.

· X-ray source: Monochrome AlK$\alpha$ ray, 12 kV, 6 mA

· Measurement diameter: Diameter 400 $\mu$m
· Electrostatic charge correction: None
· X-ray extraction angle: 90°

[Measurement of BET Specific Surface Area]

The sample was measured with a specific surface area meter (BELSORP-mini, manufactured by MicrotracBEL Corp.), and the surface area per gram of the sample measured based on the amount of the adsorbed nitrogen gas by the BET method was calculated as the specific surface area.

[Measurement of Median Diameter $D_{50}$]

0.1 g of the sample powder was added to 20 cc of acetone and the resultant mixture was subjected to sonication treatment in an ice bath for 4 hours. Then, the concentration thereof was appropriately adjusted with acetone to a concentration within a measurable range of a dynamic light scattering type particle diameter distribution measuring device (Nanotrac Wave II, manufactured by MicrotracBEL Corp.) to give a measurement sample. Using this measurement sample, the particle diameter distribution in the range of a particle diameters of 0.0001 $\mu$m to 10 $\mu$m was measured by a dynamic light scattering type particle diameter distribution measuring device to calculate the median diameter $D_{50}$, which is a diameter of which the ratio of accumulated volume percentage was 50%. However, for those have a median diameter $D_{50}$ more than 10 $\mu$m (Comparative Example 2), similarly, a solution was adjusted, and the particle diameter distribution in the range of particle diameters of 0.015 $\mu$m to 500 $\mu$m was measured with a laser diffraction particle size distribution analyzer (SALD-7000, manufactured by Shimadzu Corporation) to calculate the median diameter $D_{50}$.

[Measurement of Average Particle Diameter of Palladium Particles]

The average value of measured maximum lengths in the distance between two points on the contour line of 50 randomly selected palladium particles (however, palladium particles in a state where a plurality of palladium particles were aggregated were not selected), which were identified on the two-dimensional image obtained by photographing the palladium particles with a high-resolution transmission electron microscope (HR-TEM, JEM-ARM300F manufactured by manufactured by JEOL Ltd.) was determined to be the average particle diameter of the palladium particles.
The results of the measurements are listed in Table 1.

[Table 1]

| | | Production | | | Evaluation | | | | | | | | Catalytic performance | |
|---|---|---|---|---|---|---|---|---|---|---|---|---|---|---|
| | | Synthesis Example 1 MoS$_2$ | Palladium acetate | Methanol | Pd Content (XRF) | Mo Content (XRF) | S Content (XRF) | MoS$_2$ Content (XRF) | MoS$_2$ average crystallite size 2θ=14.4±0.5° | Average particle diameter of Pd Particles | BET specific surface area | D$_{50}$ | Overvoltage 10 mAcm$^{-2}$ | Current density -0.3 V |
| | | mg | mg | mL | mass% | mass% | mass% | mass% | nm | nm | m$^2$/g | nm | mV | mAcm$^{-2}$ |
| Synthesis Example 1 | MoS$_2$ | - | - | - | 0 | 68.8 | 31.2 | 100 | 5.3 | - | 54.0 | 250 | 194 | 51.3 |
| Example 1 | Pd-MoS$_2$ | 100 | 4.3 | 50 | 2.42 | 63.2 | 34.3 | 97.5 | 6.0 | 2 | 53.7 | 388.1 | 167 | 99.4 |
| Example 2 | Pd-MoS$_2$ | 100 | 8.8 | 100 | 5.02 | 66.3 | 28.6 | 94.9 | 5.4 | 3 | 69.8 | 434.7 | 131 | 155.9 |
| Example 3 | Pd-MoS$_2$ | 100 | 13.5 | 150 | 5.84 | 56.1 | 37.9 | 94.0 | 5.1 | 10 | 47.6 | 446.9 | 141 | 179.7 |
| Example 4 | Pd-MoS$_2$ | 100 | 23.4 | 250 | 10.7 | 58.3 | 31.0 | 89.3 | 6.0 | 12 | 46.8 | 369.6 | 148 | 159.8 |
| Comparative Example 1 | Pd-KB | 100 | 8.8 | 100 | - | - | - | - | - | 15 | 1270 | 667.1 | 235 | 21.7 |
| Comparative Example 2 | MoS$_2$ | - | - | - | 0 | 71.2 | 28.3 | 100 | 44.6 | - | 5.6 | 13340 | Impossible to measure | 0.9 |

Each of the particles in Synthesis Example 1, Examples 1 to 4, and Comparative Examples 1 and 2 had the values of palladium contents, molybdenum contents, sulfur contents, $MoS_2$ contents, $MoS_2$ average crystallite sizes, average particle sizes of palladium particles, BET specific surface areas, and $D_{50}$s listed in Table 1.

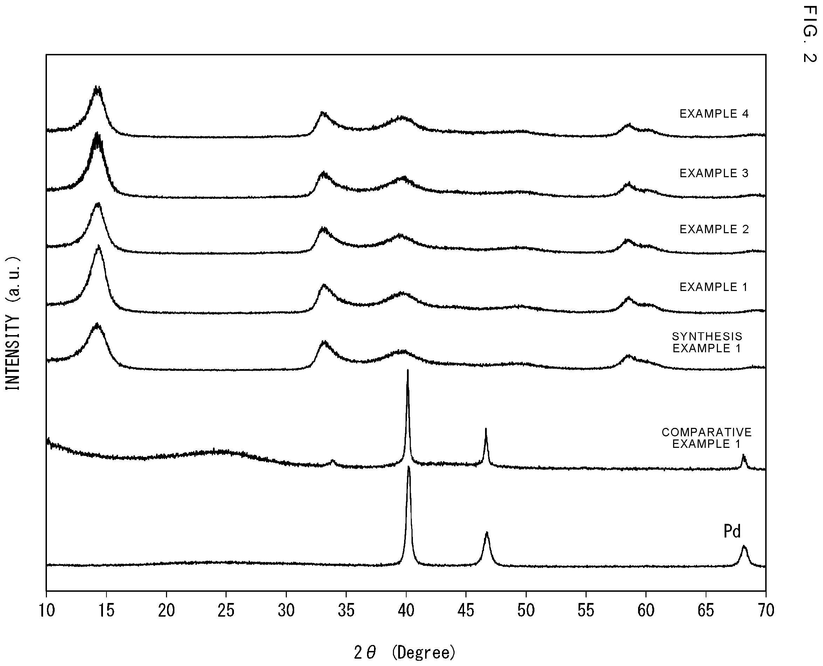

The result of the XRD analysis is illustrated in FIG. 2. The XRD profiles of the composite product particles in Examples 1 to 4 were almost identical to the XRD profile of the molybdenum disulfide particles in Synthesis Example 1. On the other hand, the XRD profile of the particles using carbon black in Comparative Example 1 was almost identical to the XRD profile of palladium (Pd) of a preparation.

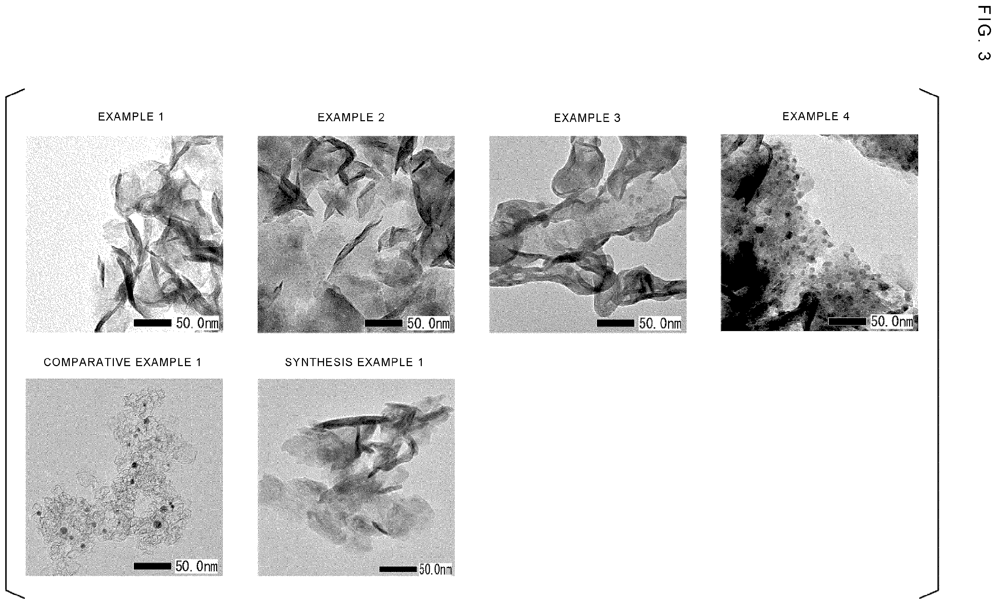

FIG. 3 illustrates the observed images of each of the particles in synthesis Example 1, Examples 1 to 4 and Comparative Example 1 obtained by using a transmission electron microscope (TEM, JEM-1400 manufactured by JEOL Ltd.) .

In the TEM images illustrated here, states where spherical particles of about 1 nm to about 10 nm in a diameter were attached or bonded to the molybdenum disulfide particles or the carbon black particles were observed. These states were clearly observed in Examples 3 and 4 and Comparative Example 1.

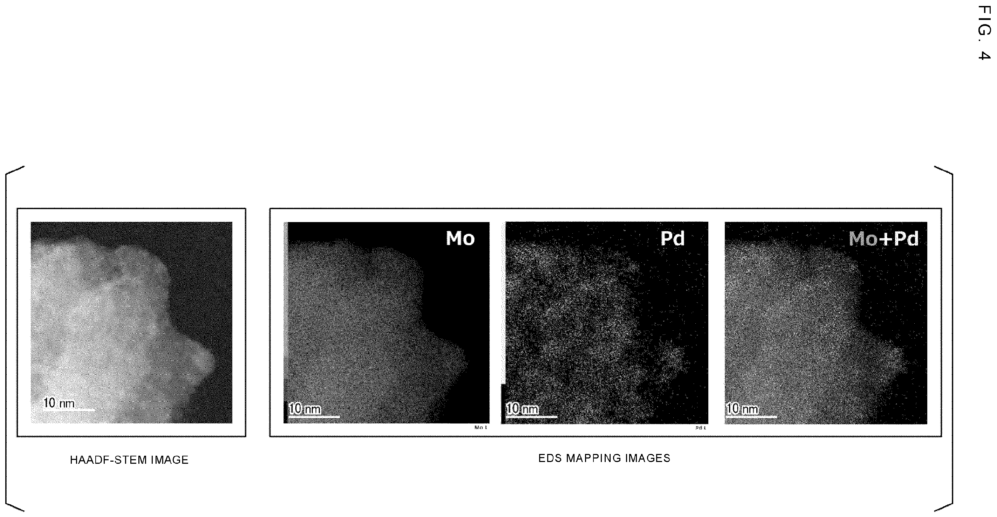

FIG. 4 illustrates the observed image of the composite product particles in Example 2 using the high-resolution transmission electron microscope (HR-TEM, JEM-ARM300F manufactured by JEOL Ltd.) and the results of element mapping by energy dispersive X-ray spectroscopy (EDS).

From the element mapping results, the dense density of Pd was detected at positions corresponding to the above spherical particles. From this result, the spherical particles of about 1 nm to about 10 nm in diameter observed in the above TEM were recognized as particles corresponding to the palladium particles containing Pd.

In the composite product particles in Examples 1 to 4, no diffraction patterns originated from the crystal structure of palladium metal were confirmed in the above XRD analysis.

This indicates that Pd in the composite product particles in Examples 1 to 4 do not have the crystal structure of the palladium metal crystal.

The values of angles of the peak (peak top) appearing at $2\theta = 14.4 \pm 0.5°$ in the above XRD analysis were 14.20° for Synthesis Example 1, 14.20° for Example 1, 14.20° for Example 2, 14.20° for Example 3, and 14.20° for Example 4, respectively. With respect to $MoS_2$ in Synthesis Example 1, no clear peak shift due to the addition of Pd was observed. From this result, with respect to the crystal structure of the molybdenum disulfide particle part in the composite product, it is presumed that no significant change in the crystal structure from the molybdenum disulfide particles in Synthesis Example 1 serving as the raw material occurs.

In a state where metal ions were distributed between layers of, for example, the material described in PTL 1, change in the layer distance of $MoS_2$ usually occurred. However, in the composite product particles in Examples 1 to 4, the peak shift of $2\theta = 14.4 \pm 0.5°$ was not observed as described above. Therefore, it was confirmed that, different from the state described in PTL 1, the $MoS_2$ layer distance was unchanged.

According to the results of the surface analysis of the composite product particles in Examples 1 to 4 by the X-ray photoelectron spectroscopy (XPS), the values of the peak positions (bonding energy values) in the 3d spectrum of Pd were Pd $3d_{5/2}$: 335.5 eV and Pd $3d_{3/2}$: 340.8 eV. The valence of Pd read from these bond energy values was 0 valence.

This suggests that, in the palladium contained in the composite product particles in Examples 1 to 4, the distribution of palladium ions into the interlayer of molybdenum disulfide does not occur, which is different from the state described in PTL 1.

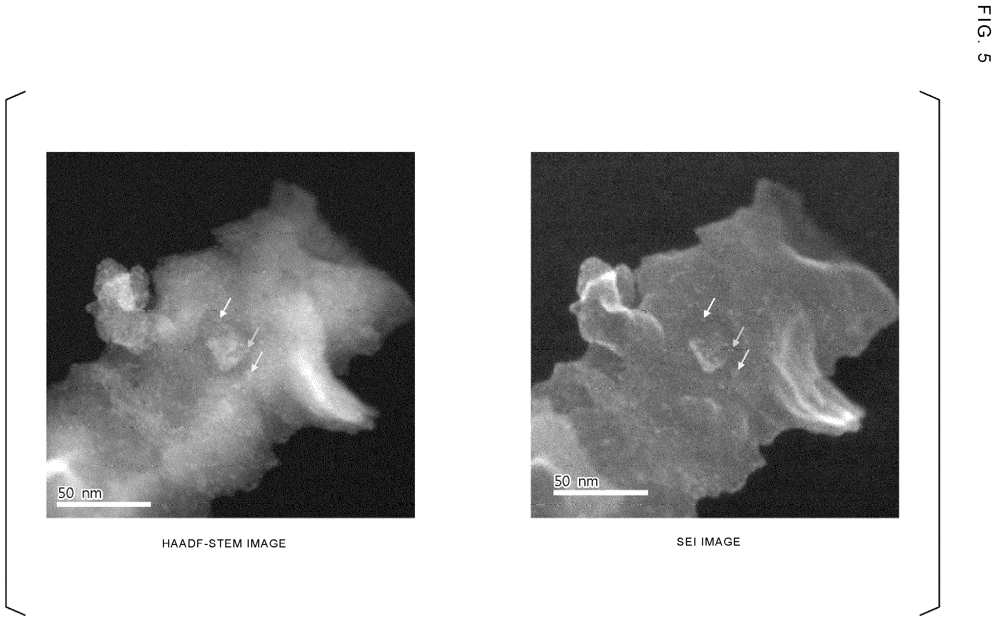

FIG. 5 illustrates the HAADF-STEM image (transmission electron image, JEM-ARM300F manufactured by JEOL Ltd.) and the SEI image (secondary electron image, JEM-ARM300F manufactured by JEOL Ltd.) of the composite product particles in Example 2. The arrows in FIG. 5 indicate an example of identical palladium particles observed in the HAADF-STEM image and the SEI image.

The transmission electron image provides information on the sample surface (including the backside of the particles in the image) and the inside of the sample, whereas the secondary electron image provides information on the topmost surface of the sample (not including the inside or backside of the particles in the image).

Comparison of the transmission electron image and the secondary electron image revealed that the majority of palladium particles were present on the surface of the molybdenum disulfide particles because many palladium particle images were observed in the secondary electron image.

From the above results, finding in which Pd in the composite product particles in Examples 1 to 4 does not have the crystal structure of the palladium metal crystal, but is present as palladium particles on the surface of molybdenum disulfide particles in the state of aggregates of zero valence palladium atoms without the crystal structure was obtained.

In $MoS_2$, if Pd doping causes Pd to constitute the crystal structure instead of Mo or if Pd is present as ions between layers, most of Pd atoms in the particles are present inside $MoS_2$.

On the other hand, in the composite product particles in each Example, the majority of Pd atoms in the composite product particles are considered to constitute the palladium particles and to be present on the surface of the composite product particles.

(Production of Catalyst Ink)

Inks were produced from the particles in Synthesis Example 1, Examples 1 to 4, and Comparative Examples 1 and 2, and catalytic performance in the hydrogen evolution reaction (HER) was evaluated by the following method.

4 mg of the obtained particles described above (any one of the particles in Synthesis Example 1, Examples 1 to 4, and Comparative Examples 1 and 2), 2 mg of carbon black (Ketjen Black, product name: EC300J manufactured by Lion Specialty Chemicals Corporation, median diameter $D_{50}$: 40 nm), 40 $\mu$L of 5% Nafion dispersion liquid (Nafion dispersion solution manufactured by Fujifilm Wako Pure Chemicals Corporation), and 1 mL of ethanol were mixed and the resultant mixture was subjected to sonication treatment for 1 hour for dispersing the particles to prepare an ink (dispersion liquid). 20 $\mu$L of the obtained ink was applied to electrode surfaces and the liquid on the surface was dried naturally. Then, the electrodes were transferred to a vacuum dryer and dried at 60°C for 6 hours or more to give test electrodes. The hydrogen evolution reaction (HER) activity of the obtained test electrodes was evaluated by a three-electrode method. As the evaluation conditions, a LSV method was used and a scan voltage range was -0.3 V to 0 V at a scanning speed of 5 mV/S.

The result of the catalytic performance is listed in Table 1.

The inks including the composite product particles in Examples 1 to 4 had lower values of overvoltage when the current density was 10 mAcm$^{-2}$ (Comparative Example 2 was not measurable) and higher values of current density at -0.3 V than those of the inks containing particles in Synthetic Examples 1 or Comparative Examples 1 and 2.

The above results indicate that the composite products in Examples 1 to 4, in which the molybdenum disulfide particles and the palladium particles are composited, can exhibit excellent catalytic activity.

Each constitution and the combinations thereof in each embodiment are examples, and additions, omissions, replacement, and other changes to the constitution are possible to the extent that the change do not deviate from the purpose of the present invention. The present invention is not limited by each embodiment, but limited only by the scope of the claims.

Reference Signs List

1 Production apparatus
2 Calcining furnace
3 Cooling pipe
4 Collection device
5 Discharge port
6 Opening degree adjustment damper
7 Observation window
8 Air exhauster
9 External cooling device

**Claims**

1. A composite product comprising:

   molybdenum disulfide particles; and
   palladium particles, wherein
   an average crystallite size of molybdenum disulfide comprised in the molybdenum disulfide particles determined from a peak of $2\theta = 14.4°\pm0.5°$ obtained by X ray diffraction measurement is 150 nm or less.

2. The composite product according to claim 1, wherein an average particle diameter of the palladium particles is 20 nm or less.

3. The composite product according to claim 1 or 2, wherein the palladium particles are present on a surface of the molybdenum disulfide particles.

4. The composite product according to claim 1 or 2, wherein the palladium particles comprise an aggregate of palladium atoms having no crystal structure.

5. The composite product according to claim 1 or 2, wherein a median diameter $D_{50}$ of the composite product determined by a dynamic light scattering method is 1,000 nm or less.

6. The composite product according to claim 1 or 2, wherein a specific surface area of the composite product measured by a BET method is 10 $m^2$/g or more and 200 $m^2$/g or less.

7. The composite product according to claim 1 or 2, wherein a ratio of a content of palladium with respect to a total mass of the composite product determined by XRF analysis is 0.1 mass% or more.

8. The composite product according to claim 1 or 2, wherein molybdenum disulfide comprised in the molybdenum disulfide particles comprises a 3R crystal structure.

9. The composite product according to claim 1 or 2, wherein a shape of primary particles of the molybdenum disulfide particles is a string shape, a ribbon shape, or a sheet shape and an average thickness is 50 nm or less.

10. A catalyst ink comprising:

    the composite product according to claim 1 or 2; and
    a solvent.

11. A method for producing the composite product according to claim 1 or 2, the method comprising a step of mixing molybdenum disulfide particles and a palladium solution, wherein
    an average crystallite size of molybdenum disulfide comprised in the molybdenum disulfide particles determined from a peak of $2\theta = 14.4° \pm 0.5°$ obtained by X ray diffraction measurement is 150 nm or less.

FIG. 1

FIG. 2

FIG. 3

FIG. 4

EDS MAPPING IMAGES

HAADF-STEM IMAGE

FIG. 5

SEI IMAGE

HAADF-STEM IMAGE

## INTERNATIONAL SEARCH REPORT

| International application No. |
| --- |
| **PCT/JP2023/028256** |

**A.   CLASSIFICATION OF SUBJECT MATTER**

**B01J 27/051**(2006.01)i; **B01J 37/04**(2006.01)i; **C01G 39/06**(2006.01)i; **C25B 1/04**(2021.01)i
FI:    B01J27/051 M; B01J37/04 102; C01G39/06; C25B1/04

According to International Patent Classification (IPC) or to both national classification and IPC

**B.   FIELDS SEARCHED**

Minimum documentation searched (classification system followed by classification symbols)

B01J21/00-38/74; C01G39/06; C25B1/02-1/04; H01M4/86-4/98

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C.   DOCUMENTS CONSIDERED TO BE RELEVANT**

| Category* | Citation of document, with indication, where appropriate, of the relevant passages | Relevant to claim No. |
| --- | --- | --- |
| X | B. B. LI et al. Pd coated MoS2 nanoflowers for highly efficient hydrogen evolution reaction under irradiation. Journal of Power Sources, 05 March 2015, vol. 284, pp. 68-76, DOI: 10.1016/j.jpowsour.2015.03.021<br>    abstract, p. 69, left column, fifth paragraph to p. 70, right column, fourth paragraph, fig. 1, 2, 5, table 1 | 1-3, 5-7, 9-11 |
| Y | | 8 |
| X | KR 10-2021-0130930 A (RESEARCH AND BUSINESS FOUNDATION SUNGKYUNKWAN UNIVERSITY) 02 November 2021 (2021-11-02)<br>    claims, paragraphs [0001]-[0021] | 1-3, 5-7, 9 |
| Y | | 8 |
| X | CN 112774697 A (NANJING UNIVERSITY) 11 May 2021 (2021-05-11)<br>    claims, paragraphs [0001]-[0019], fig. 1, 3 | 1-3, 6-7, 9 |
| Y | | 8 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 October 2023** | **17 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/028256** |

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114772643 A (INSTITUTE OF BIOMEDICAL ENGINEERING, GUANGDONG ACADEMY OF SCIENCES) 22 July 2022 (2022-07-22) claims, paragraphs [0001]-[0033], [0079], [0084]-[0089], example 2, fig. 4, 8 | 1-3, 5-7, 9-11 |
| X | CN 111146455 A (FUZHOU UNIVERSITY) 12 May 2020 (2020-05-12) claims, paragraphs [0001]-[0010], examples 1-5, fig. 1 | 1-3, 5-7, 9-11 |
| Y | TOH, Rou Jun et al. 3R phase of MoS2 and WS2 outperforms the corresponding 2H phase for hydrogen evolution. Chemical Communications, 27 February 2017, vol. 53, no. 21, pp. 3054-3057, DOI: 10.1039/c6cc09952a abstract, p. 3055, left column, second paragraph to p. 3057, right column, first paragraph, Electronic Supplementary Material, p. S2, fourth paragraph, fig. S1-S22, table S1 | 8 |
| A | ZUO, Ling-Xia et al. A facile sonochemical route for the synthesis of MoS2/Pd composites for highly efficient oxygen reduction reaction. Ultrasonics Sonochemistry, 04 February 2016, vol. 35, pp. 681-688, DOI: 10.1016/j.ultsonch.2016.02.006 entire text, all drawings | 1-11 |
| A | US 2016/0367968 A1 (QUEEN MARY UNIVERSITY OF LONDON) 22 December 2016 (2016-12-22) entire text, all drawings | 1-11 |
| P, X | WO 2022/172824 A1 (DIC CORP.) 18 August 2022 (2022-08-18) claims, paragraphs [0002]-[0026], examples, fig. 4-10 | 1-3, 5-10 |
| P, X | WO 2022/172826 A1 (DIC CORP.) 18 August 2022 (2022-08-18) claims, paragraphs [0001]-[0021], [0351], examples, fig. 4-7, 9-18, 21-27 | 1-3, 5-10 |

Form PCT/ISA/210 (second sheet) (January 2015)

**INTERNATIONAL SEARCH REPORT**
Information on patent family members

| International application No. |
| --- |
| **PCT/JP2023/028256** |

| Patent document cited in search report | | | Publication date (day/month/year) | Patent family member(s) | | | Publication date (day/month/year) |
| --- | --- | --- | --- | --- | --- | --- | --- |
| KR | 10-2021-0130930 | A | 02 November 2021 | (Family: none) | | | |
| CN | 112774697 | A | 11 May 2021 | (Family: none) | | | |
| CN | 114772643 | A | 22 July 2022 | (Family: none) | | | |
| CN | 111146455 | A | 12 May 2020 | (Family: none) | | | |
| US | 2016/0367968 | A1 | 22 December 2016 | WO | 2015/059503 | A1 | |
| | | | | EP | 3060337 | A1 | |
| WO | 2022/172824 | A1 | 18 August 2022 | (Family: none) | | | |
| WO | 2022/172826 | A1 | 18 August 2022 | TW | 202241585 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022123199 A
- CN 106608652